# EUROPEAN PATENT APPLICATION

(11) **EP 3 578 055 A1**
(43) Date of publication of application: **11.12.2019**
(21) Application number: 18175846.7
(22) Date of filing: 04.06.2018
(51) Int. Cl.: A23L 7/10, A23L 7/122, A23L 7/135, A23L 7/191, A23L 19/00, A23P 20/00, A23P 30/30, A21D 13/31, A21D 13/38, A21D 13/37

(54) **FRUIT FLAVOURED COMPOSITIONS AS ADDITIVE TO FARINACEOUS BASED MATERIAL, PROCESS FOR THEIR PREPARATION AND PRODUCTS CONTAINING THE COMPOSITION**

(71) Applicant: Gat Givat Haim Cooperative Society For Preservation of Agricultrual Products Ltd., 3898300 M.P. Hefer (IL)
(72) Inventor: GHENDLER, Yuval, Raana 4343423 (IL); MEDINI, Omer, M.P. Hefer P.O.B. 686 3953500 (IL); GAY, Amit, M.P. Hefer P.O.B. 686 3953500 (IL)
(74) Representative: Millburn, Julie Elizabeth

(57) **Abstract**

The invention is directed to a fruit flavored composition comprising (wt/wt):
- 65 - 85% fruit source
- 8 - 15% starch, and
- 8 - 15% water.

A process for making the composition and a dry fruit flavored ready-to-eat cereal or snack comprising the composition are also described.

## Description

### TECHNOLOGICAL FIELD

Compositions of fruits or fruit ingredients used as additives to foods, processes for preparing sweetened and flavored foods.

### BACKGROUND ART

References considered to be relevant as background to the presently disclosed subject matter are listed below:
- US 3,134,683
- US 4,880,645
- US 6,268,007
- US 6,287,621
- US 6,440,473
- CN 102919698; CN 102919699; CN 102919706; CN 102919707; CN 102919710; CN 102940200

Acknowledgement of the above references herein is not to be inferred as meaning that these are in any way relevant to the patentability of the presently disclosed subject matter.

### BACKGROUND

Additives to foods include, among others sweeteners and/or flavors. The source of such additives may be various types of natural or synthetic purely added sugars and/or flavors. Another source of additives to foods are fruit juice, honey or similar sweeteners that have high levels of natural sugars. More particularly, in the field of sweetened farinaceous (made from, or rich in starch or flour) materials such as crackers, puffed cereals, direct expended extruded, cooked cereals (traditional cereals), cold/pasta forming extrusion, direct extruded, pellet extruded, chips and snacks. The sweetened additive may be embedded inside the product or may be added as a coating to the product. US 3,134,683 describes a process for the preparation of a dried fruit product having a crisp, tender texture comparable to breakfast cereal that is moisture equilibrium with cereals and thus can be incorporated with cereals for a combined consumption. US 4,880,645 describes ready-to-eat cereals that have an outer coating made up of a sweetening syrup made from reducing sugars and added pectin. US 6,268, 007 and US 6,440,473 describes a process for the manufacture of a coated product, where the base is made of extruded wheat, barley, maize, rice, flour, semolina, or mixtures thereof with water and the coating consists of sugar, honey, fruit or vegetable pulp or concentrate, functional fruit extracts and additives. US 6,287, 621 describes sweetened extruded cereals containing pregelatinized high amylose starches. The cereals are prepared by extruding a mixture of cereal flour, one or more sweetener, high amylose starch or flour having a high amylose content at prescribed temperature and pressure and toasting the final extruded product. CN 102919698; CN 102919699; CN 102919706; CN 102919707; CN 102919710; CN 102940200 all describe manufacturing methods of the fruit flavored corn flakes that includes: mixing 55-65 parts by weight of waxy corn flower, 20-30 parts by weight of sweet corn flower and 15-25 parts by weight of fruit juice. These publications describe the preparation of kiwi, grapefruit, apple, peach, pineapple and strawberry flavored corn flakes, respectively.

### GENERAL DESCRIPTION

The present invention is directed to fruit flavored compositions and their use as sweetened and/or fruity flavor additives to farinaceous (made from, or rich in starch or flour) based materials. The fruit based composition comprising (wt/wt):
About 65- 85% fruit source
About 8-15% starch
About 8-15% water

Optionally about 1.5-5% nutritional fiber.

Preferably, the fruit source is about 70-85%, most preferably about 80%. Nutritional fiber are preferably at an amount of 3-5% and are added in the indicated amount in case the fruit source is devoid of natural fiber. The Starch is about 9-11% most preferably is 10%. Water is about 9-11% most preferably is 10%. In case of a peel extract, puree fruit concentrate or other fruit source and fruit ingredients comprising fiber, the amount of added natural fiber is to complete to the indicated amount, i.e. smaller amount is added or no nutritional fiber is added as the fruit source includes the required amount of natural fiber.

Water are preferably, potable or reverse osmosis (RO) are added.

The composition may further comprise about 0.025 - 0.05% essential oil. Essential oil and/or FTNF (From The Name Fruit) which are specific fruit flavor extracts that are derived exclusively from a specific fruit. Examples of such FTNF are Boysenberry, Gooseberry, Guava and Carambole, Indian Totapuri for mango, aromatic Senga Sengana for strawberry, and sweet juicy Caribbean pineapples. Alternatively a mixture of essential oil and FTNF are added in the indicated amount.

The fruit flavored compositions are aimed for adding to the farinaceous based materials prior to or during their preparation for ready to eat product, i.e. while cooking/extruding. The result is a farinaceous based, e.g. starch or flour based, ready-to-eat product having fruity flavored. Fruity flavored may be sweetened or non- sweetened, the latter being for example lemon flavor.

Thus the invention is directed to a process of adding the fruit based composition of the present invention to the farinaceous based material prior to its processing, thus processing to a ready-to-eat product is done on the mixture of farinaceous material and fruit based composition.

In a further embodiment, the invention is directed to a process of adding the fruit based composition of the present invention to the farinaceous material during its processing to a ready-to-eat product.

In a yet further embodiment the invention is directed to a farinaceous based material sweetened or having a fruity flavored by the composition of the present invention to from a ready-to-eat product that is further coated with a composition having a fruit based component, i.e. resulting in a double sweetened by fruity flavored ready to eat product.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

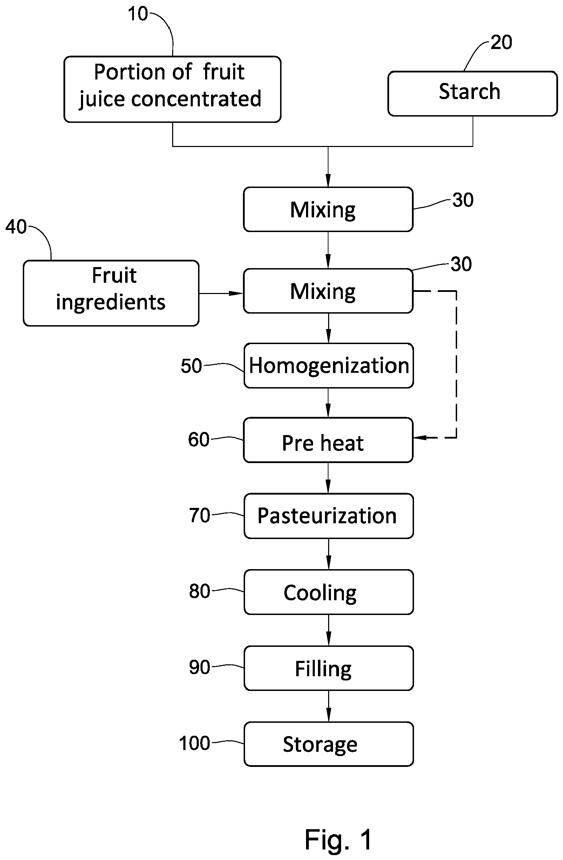

**Fig. 1** is diagrammatical scheme representing the preparation of the fruit based composition to be added as a part of the farinaceous (flour) to prepare the final product via extrusion process. The various components are added and mixed in a certain order, if necessary homogenized, pasteurized, cooled to package.

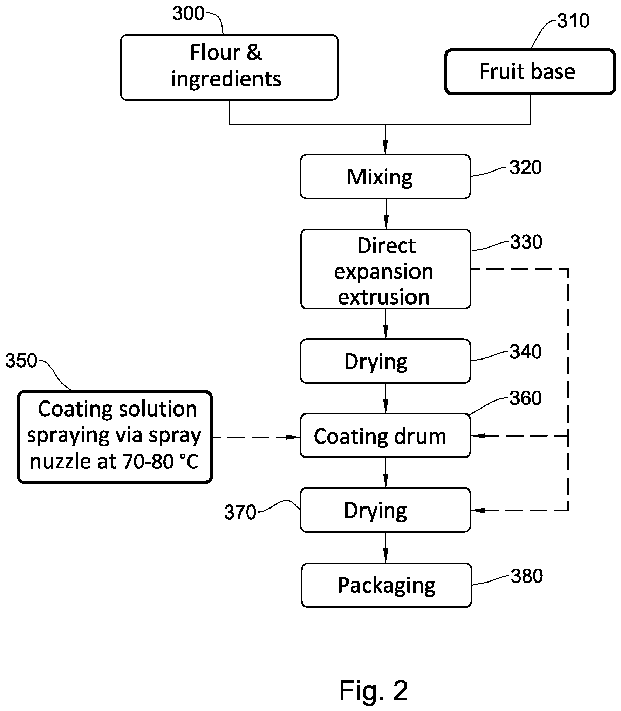

**Fig. 2** is a diagrammatical scheme representing the processes to combine the fruit based composition with the farinaceous (flour) as **"direct mix"** in order to avoid lumps. The mixture is then extruded to the final product. The final product contains fruity flavored end product; fruit contents and flavor vary depending on the fruit used to prepare the composition.

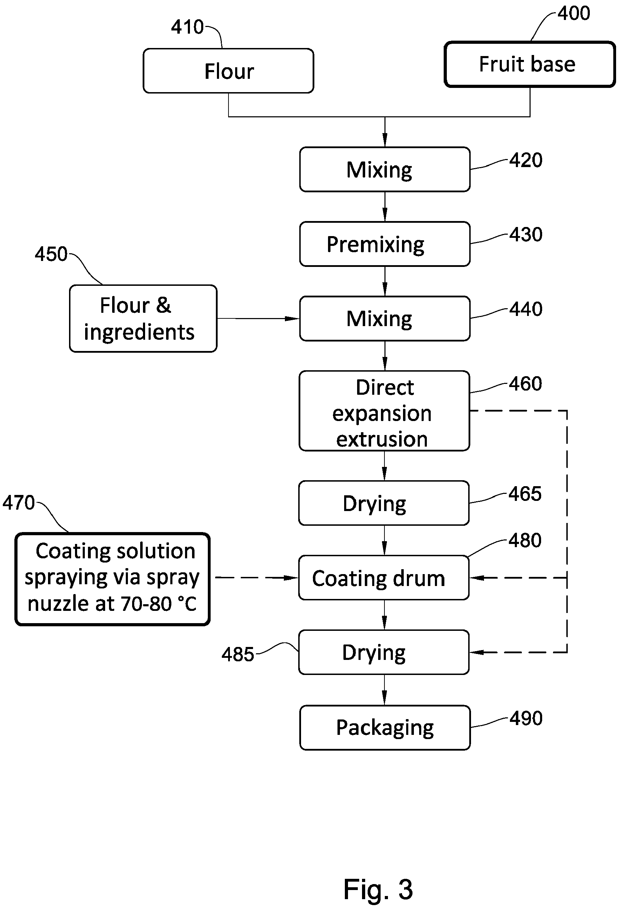

**Fig. 3** is a diagrammatical scheme representing the processes to combine the fruit based composition with a portion of the farinaceous (flour) as a **"premix".** The purpose is to have a good mixing without lumps. Then the premix is added to the rest of the flours and all the mixing is extruded to the final product. The final product contain fruity flavored end product; fruit contents and flavor vary depending on the fruit used to prepare the composition.

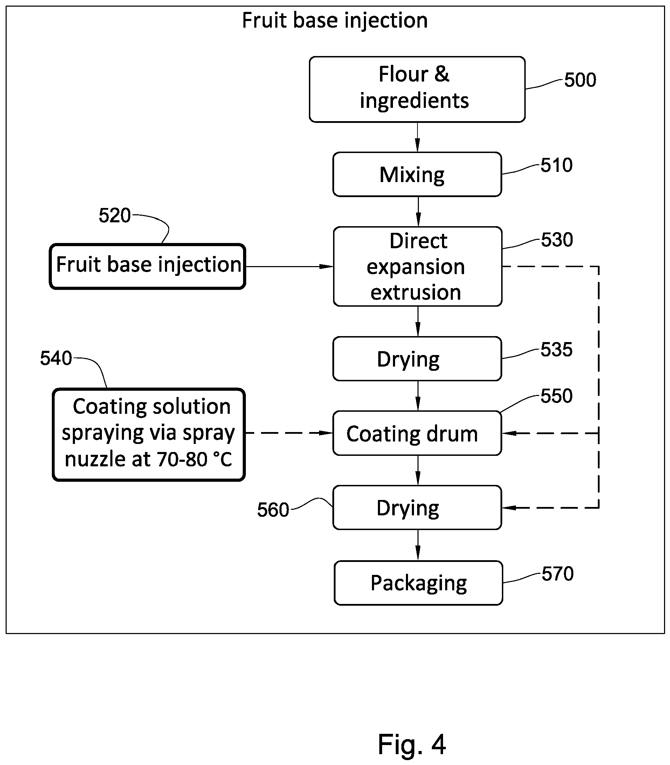

**Fig. 4** is a diagrammatical scheme representing the processes of **injection** the "base" to the extruder during the extrusion processes. The final product contain fruit and fruit ingredients flavored end product; fruit contents and flavor vary depending on the fruit used to prepare the composition.

### DETAILED DESCRIPTION OF EMBODIMENTS

The present invention is thus directed to a fruit flavored (based) composition for sweetening and for providing fruity flavoring to farinaceous (made from, or rich in starch or flour) materials, or to farinaceous based material. The farinaceous based, i.e. starch- or flour-based food material is preferably cereals, commonly referred to as "breakfast cereals" that are made from corn, rice whole rice, wheat, whole wheat, oat, whole oat, barley and whole barley or their mixtures. The present invention is further directed to the production of a ready-to-eat fruity flavored product. The present invention is also directed to the process for preparing the fruit based composition. In particular, the invention is directed to a dry sweetened and/ or fruity flavored ready-to-eat cereal or snack, the cereal may be extruded, puffed, flaked, cooked (Traditional cereals), cold/ pasta forming extrusion, direct extruded, pellet extruded, where the farinaceous material is flour made from the group comprising corn, rice whole rice, wheat, whole wheat, oat, whole oat, barley and whole barley. It should be noted that fruity flavoring may also be non-sweetening such as lemon flavored ready-to-eat fruity flavored product. The compositions according to the present invention providing sweetened and flavored foods may be combined with any farinaceous material and is not limited to a flower from a specific pre-determined source that was adjusted in order to accommodate and maintain fruit components.

The composition comprises one or more source of fruit for attributing the fruity flavoring. None limiting sources of fruit include fruit juice such as clear fruit juice, fruit concentrate and clear fruit concentrate, fruit ingredients such as cloudy concentrate peel extract or puree fruit juice fruit puree, fruit concentrate, pulp wash, core wash, peel extract, fruit cells, fruit comminute.

The composition further comprises starch, water and fibers, preferably natural fibers depending on the content of fiber of the source of fruit. It may further comprise, preservatives, natural flavoring, essential oil and/or FTNF. Fibers are added in order to have a certain amount of fiber and hence in case the one or more source of fruit includes fibers (cloudy or puree fruit juice) a small amount of fiber are added or no fiber at all is needed.

Fruit juice and concentrate is selected from apple, citrus, e.g. grapefruit, orange, tangerine, lemon, banana, strawberry, pineapple, pear, peach, etc. and combination thereof.

Ready-to-eat food product that may be flavored by the addition of the fruit based composition of the present invention is breakfast cereals that are based on farinaceous materials, snacks, in particular breakfast cereals.

Non limiting examples of farinaceous materials (made from, or rich in starch or flour) are flours made from corn, rice whole rice, wheat, whole wheat, oat, whole oat, barley and whole barley or their mixtures. Thus farinaceous based materials are materials having a high contents of starch or flour, high being 75-100% (wt/wt).

Non limiting examples of starch are natural starches having high amylose native starch with fully gelatinization abilities above 100°C e.g. In particular, the high amylose content is above 50% amylose contents. Preferably having about 55%, 60%, 65% or 70% amylose contents.

Non limiting examples of essential oil are etheric oils as well as a mixer of these essential oils. These may be oils derived from citrus, i.e. orange, grapefruit, mandarin, tangerine, lemon, or eucalyptus or summer savory.

Non limiting examples of nutritional fibers are citrus fibers in particular, lemon, lime, orange, grapefruit, mandarins, acacia, bamboo.

In particular, the fruit based composition is added to the breakfast cereals (cereal flours) forming a mixture. The mixture of the flours with the composition is cooked-extruded expended in the form of tubular strand, using the extruder die, cutting to a desired shape at the outlet orifice of the extruder, the form of the "flake" may vary and depends on the extruder die shape. Alternatively, the composition may be injected during the extrusion processes.

It should be noted that ready-to-eat food product according to the invention comprising the fruit based composition may further be coated with a fruit based composition. In such a case the final fruity flavored product is sprayed or injected via a spray nozzle on the surface of the flakes giving the flakes a film. Following the application of the coating, the coated product is dried, resulting in a fruity flavored, sweetened product, where the coated "flaks" do not stick one to the other.

The process for preparing a dry ready-to-eat fruit sweetened food having a fruity flavor generally comprises:
- adding while mixing starch to a fruit component;
- adding a further fruit component, optionally nutritional fiber and optionally water to obtain a fruit based composition;
- preparing a mixture of farinaceous material;
- mixing the fruit composition and the mixture containing the farinaceous material;
- processing the combined mixture by direct expansion extrusion, cooking, to obtain a puff product or extruded products ;
- drying and packaging.

Alternatively the process for preparing a dry ready to eat fruit flavored food having a fruity flavor may comprise:
- adding while mixing starch to a fruit component;
- adding a further fruit component, optionally nutritional fiber and optionally water to obtain a fruit based composition;
- preparing a mixture of farinaceous material;
- preparing a mixture of farinaceous material, water;
- processing the farinaceous material to an expanded extruded product
- add the fruit composition to the expanded extruded product by injection;
- drying and packaging.

It should be noted that according to the present invention, the two processes may be applied to farinaceous material is selected from flour made from the group comprising corn, rice whole rice, wheat, whole wheat, oat, whole oat, barley and whole barley where the starch is selected from high amylose starch comprising at least 50 wt% amylose, preferably about 55%, 60%, 65% or 70 wt% amylose. These processes are suitable for using fruit juice is selected from citrus, banana, strawberry, pineapple, pear, peach and combination thereof; the additional fruit component different from clear juice is selected from fruit puree, fruit concentrate, pulp wash, core wash, Peel extract, cells, comminute.

The fruit based composition for adding to the farinaceous (flour) based product prior to its processing or during processing is composed of the source of fruit, starch, water and fibers, the latter either being naturally in the source of fruit or added in the required amount. It is manufactured by the following process as depicted in **Figure 1****.** Source of fruit **(10),** particularly concentrated clear fruit juice is mixed together with starch **(20)** in a tank using an agitator of turbine head mixer with a speed of 200-500 R.P.M **(30).** The starch may be from wheat, barley, rice, tapioca, potato, maize or mixtures thereof. The starch is slowly added over a period of 4-10, particularly 5-9, more particularly 6-8 hours to the fruit concentrate while mixing slowly in order to avoid lumping and obtain good dispersion abilities. While being mixed, additional fruit components/ingredients (**40**) are added, such as fibers, cloudy concentrate, fruit puree. Water is added if necessary. The mixture might be homogenized at a two stage homogenizer (**50**) at ambient temperature, first stage a pressure of 150-220 and at a second stage under a pressure 20-50 bar. Following, the above, the mixture is heated (**60**) to a temperature of 70-100°C, particularly, 85-95°C for a short while (10-60 seconds) and pasteurized (**70**), cooled to 25-40°C (**80**) and packaged aseptically in aseptic packages (**90**) providing a "ready to use" composition may be stored in -18°C or chilled 0-4°C or ambient **(100).** It is then used as described above as an additive to the flours. The source of fruit whether fruit or fruit component may vary according to the requirements of desired flavor and/or degree of sweetness.

Turning to **Figure 2****,** the fruit based composition for addition to the farinaceous may be applied to the farinaceous based material as depicted in Figures **2-4****.** Turning to Figure **2****,** direct mix is described. Thus flour, and starch and ingredients (emulsifier for example E-471 mono and diglycerides, salt, vitamins) **(300)** are poured into a mechanical mixer **(320)** followed by the introduction of a fruit composition of the present invention **(310)** to the farinaceous based material. The mixture undergoes direct expansion extrusion by a twin screw extruder. The back pressure was set to 80-120 bar, the extruder Die plate's temperature 100-130°C, Barrel temperature is between 90-130°C, screw speed 200-450 R.P.M., Extruding retention time 20-40 sec., product's humidity at the outlet from the die 14-20% **(330)** followed by drying **(340).** At the present point the resulting product may be packed (380) for consumption or optionally further coated with a fruit base "coating solution" (to be amended according to the second application) by spraying via spray nozzle at a temperature of 70-80°C **(350)** on a drum **(360).** The coated product is dried **(370)** and packaged yielding the final product of a fruity flavor sweetened product.

Alternatively as depicted in **Figure 3****,** the fruit based composition of the invention may be combined with the farinaceous based material as a pre-mix. Thus, the fruit based composition (400) and flour **(410)** are mixed **(420)** to form a pre-mix **(430).** While mixing (440), flour, starch and ingredients (emulsifier, salt, vitamins) **(450)** are added. The mixture undergoes direct expansion extrusion by a twin screw extruder. The back pressure was set to 80-120 bar, the extruder Die plate's temperature 100-130°C, Barrel temperature is between 90-130°C, screw speed 200-450 R.P.M., Extruding retention time 20-40 sec., product's humidity at the outlet from the die 14-20% **(460)** followed by drying (465). At the present point the resulting product may be packed (490) or optionally coated with fruit base "coating solution" by spraying via spray nozzle at a temperature of 70-80°C **(470)** on a drum **(480).** The coated product is dried **(485)** and packaged **(490)** yielding the final product of a fruity sweetened flavor product.

In a further option, and as depicted in **Figure 4****,** the fruit based composition of the present invention may be injected to the flour based component during extrusion process. Thus, a mixture of flour, starch and ingredients (emulsifier, salt, vitamins) **(500)** poured and mixed in a mixture **(510).** While the mixture **(500)** undergoes direct expansion extrusion by a twin screw extruder. The back pressure was set to 80-120 bar, the extruder Die plate's temperature 100-130°C, Barrel temperature is between 90-130°C, screw speed 200-450 R.P.M., Extruding retention time 20-40 sec., product's humidity at the outlet from the die 14-20% (530), the fruit based composition of the present invention (520) is injected and the resulting product is dried **(535).** At the present point the resulting product may be packed (570) or coated with fruit base by spraying via spray nozzle at a temperature of 70-80°C **(540)** on a drum **(550).** The coated product is dried **(560)** and packaged **(570)** yielding the final fruity sweetened flavored product.

The term "about" as used throughout the application is understood as the indicated value having a range of ±10%.

### Examples

### Example 1- Apple based fruit composition for adding to farinaceous material:

810Kg of apple concentrate and 110kg of starch were added and mixed in a tank using an agitator of turbine head mixer (400 R.P.M). The starch was added over a period of several hours to the fruit concentrate while mixing slowly. While being mixed, up to 15kg of fibers, water 65Kg. The resulting mixture was pasteurized (90°C) for 40 seconds. Following, it was then cooled to about 25-40°C and packaged providing the "ready to use" composition. Storage conditions varied (-18°C or chilled 0-4°C).

### Example 2- Apple Banana based fruit composition for adding to farinaceous material:

510Kg of apple concentrate, 310kg banana puree and 100kg of starch were added and mixed in a tank using an agitator of turbine head mixer (400 R.P.M). The starch was added over a period of several hours to the fruit concentrate while mixing slowly. While being mixed, fruit puree was added and water (up to 90 liters). The mixture was then homogenized at a two stage homogenizer at ambient temperature, first stage a pressure of 200 bar and at a second stage under a pressure 40 bar. The resulting mixture was pasteurized (90°C) for 40 seconds. It was then cooled to about 25-40°C and packaged providing the "ready to use" composition. Storage conditions varied (-18°C or chilled 0-4°C).

### Example 3 - Pear Orange base based fruit composition for adding to farinaceous material:

410Kg of pear concentrate, 210kg orange concentrate and 95kg of starch were added and mixed in a tank using an agitator of turbine head mixer (400 R.P.M). The starch was added over a period of several hours to the fruit concentrate while mixing slowly. While being mixed, 210kg orange cells were added and 85 liters of potable water. The mixture was then homogenized at a two stage homogenizer at ambient temperature, first stage a pressure of 200 bar and at a second stage under a pressure 40 bar. The resulting mixture was pasteurized (90°C) for 40 seconds. It was then cooled to about 25-40°C and packaged providing the "ready to use" composition. Storage conditions varied (-18°C or chilled 0-4°C).

### Example 4 Pear Orange Mango base based fruit composition for adding to farinaceous material:

410Kg of pear concentrate, and 95kg of starch were added and mixed in a tank using an agitator of turbine head mixer (400 R.P.M). The starch was added over a period of several hours to the fruit concentrate while mixing slowly. While being mixed, 210kg orange cells were added 210kg mango puree and 85 liters of potable water. The mixture was then homogenized at a two stage homogenizer at ambient temperature, first stage a pressure of 200 bar and at a second stage under a pressure 40 bar. The resulting mixture was pasteurized (90°C) for 40 seconds. It was then cooled to about 25-40°C and packaged providing the "ready to use" composition. Storage conditions varied (-18°C or chilled 0-4°C).

### Example 5 Apple Orange Mango base based fruit composition for adding to farinaceous material:

410Kg of Apple concentrate, and 95kg of starch were added and mixed in a tank using an agitator of turbine head mixer (400 R.P.M). The starch was added over a period of several hours- to the fruit concentrate while mixing slowly. While being mixed, 210kg orange cells were added 210kg mango puree and 85 liters of potable water. The mixture was then homogenized at a two stage homogenizer at ambient temperature, first stage a pressure of 200 bar and at a second stage under a pressure 40 bar. The resulting mixture was pasteurized (90°C) for 40 seconds. It was then cooled to about 25-40°C and packaged providing the "ready to use" composition. Storage conditions varied (-18°C or chilled 0-4°C).

## Claims

1. Fruit flavored composition additive to farinaceous based material comprising (wt/wt):
- About 65 - 85% fruit source
- About 8 - 15% starch
- About 8 - 15% water
- Optionally about 1.5-5% nutritional fiber.

2. The fruit flavored composition of claim 1 comprising (wt/wt): 70-85% fruit source, 9-11% starch, 9-11% water and 3-5% natural fiber.

3. The fruit flavored composition of claim 1, wherein the fruit source is selected from fruit juice clear fruit juice, fruit concentrate and clear fruit concentrate, fruit ingredients such as, fruit puree, pulp wash, core wash, peel extract, fruit cells, fruit comminute.

4. The fruit flavored composition of claim 1, wherein the nutritional fiber is selected from citrus fiber, acacia, bambusoideae, essential oil and vegetable oil selected from canola (rapeseed), soya, corn, and citrus.

5. The fruit flavored composition according to claim 1, wherein the fruit juice is selected from apple, citrus, e.g. grapefruit, orange, tangerine, lemon, banana, strawberry, pineapple, pear, peach, etc. and combination thereof.

6. The fruit flavored composition according to claim 1, wherein the starch is selected from natural starches having above 50% amylose content with fully gelatinization abilities above 100°C e.g.

7. The fruit flavored composition of claim 6, having about 70 wt% amylose content.

8. The fruit flavored composition according to claim 1 wherein the farinaceous based material is flour made from the group comprising corn, rice whole rice, wheat, whole wheat, oat, whole oat, barley and whole barley.

9. The fruit flavored composition according to claim 1 further comprising flavorings, preservatives, 0.025-0.05 essential oil and/or fruit flavor extracts From The Name Fruit (FTNF).

10. A dry fruit flavored ready-to-eat cereal or snack comprising the composition of any one of the preceding claims.

11. The dry sweetened ready-to-eat cereal of claim 10 selected from cereals composed of corn, rice, whole rice, wheat, whole wheat, and oat, whole oat, barley, whole barley.

12. The dry sweetened food of claim 10, wherein the ready-to-eat cereal is extruded, puffed, flaked cereal, cooked (Traditional cereals), cold/pasta forming extrusion, direct extruded, pellet extruded.

13. The dry sweetened food of claim 10, further coated with the fruity flavored coating.

14. A process for preparing a fruit flavored additive to farinaceous based material, comprising:
- Adding while mixing starch to at least one type of fruit juice or concentrated fruit juice;
- Further adding natural fiber, optionally additional fruit component different from juice or concentrated fruit juice, and optionally water;
- Optionally homogenizing at ambient temperature at a two stage homogenizer under a first pressure of 150-220 and at a second stage under a pressure 20-50 bar;
- Pasteurizing at 70-100°C for 10-60 seconds;
- Cooling and storing.

15. The process according to claim 14, wherein the fruit juice or concentrated fruit juice is selected from apple, citrus, e.g. grapefruit, orange, tangerine, lemon, banana, strawberry, pineapple, pear, peach, etc. and combination thereof; the additional fruit component different from fruit juice or concentrated fruit juice is selected from fruit puree, fruit concentrate, pulp wash, core wash, peel extract, cells, comminute; the starch is selected from high amylose containing starch undergoing gelatinzation above 100°C comprising between above 50 to about 70 wt% amylose.
